(19) **Europäisches Patentamt / European Patent Office / Office européen des brevets**

(11) **EP 1 505 680 B1**

(12) **EUROPEAN PATENT SPECIFICATION**

(45) Date of publication and mention of the grant of the patent:
**03.12.2008 Bulletin 2008/49**

(51) Int Cl.:
*H01M 10/40* (2006.01)　　*H01M 6/16* (2006.01)
*H01G 9/00* (2006.01)　　*G02F 1/15* (2006.01)
*H01L 31/042* (2006.01)

(21) Application number: **04018470.7**

(22) Date of filing: **04.08.2004**

(54) **Non-aqueous electrolyte and a battery, a supercapacitor, an electrochromic device and a solar cell including such an electrolyte**

Nicht-wässriger Elektrolyt und eine Batterie, ein Superkondensator, eine elektrochromische Vorrichtung und eine Solarzelle enthaltend einen solchen Elektrolyt

Electrolyte non aqueux et une batterie, un supercondensateur, un dispositif électrochromique et une cellule solaire contenant un tel électrolyte

(84) Designated Contracting States:
**AT BE BG CH CY CZ DE DK EE ES FI FR GB GR HU IE IT LI LU MC NL PL PT RO SE SI SK TR**

(30) Priority: **08.08.2003 EP 03018161**

(43) Date of publication of application:
**09.02.2005 Bulletin 2005/06**

(73) Proprietor: **Max-Planck-Gesellschaft zur Förderung der Wissenschaften e.V.**
**80539 München (DE)**

(72) Inventors:
• **Bhattacharryya, Aninda**
**70569 Stuttgart (DE)**
• **Maier, Joachim**
**75446 Wiernsheim (DE)**

(74) Representative: **Manitz, Finsterwald & Partner GbR**
**Postfach 31 02 20**
**80102 München (DE)**

(56) References cited:
EP-A- 0 805 504　　　EP-A- 0 895 296
US-A- 3 625 769　　　US-A- 4 228 229
US-A- 5 168 019　　　US-A- 6 045 594

• PATENT ABSTRACTS OF JAPAN vol. 2003, no. 12, 5 December 2003 (2003-12-05) & JP 2003 317695 A (NITTO DENKO CORP.), 7 November 2003 (2003-11-07)
• PATENT ABSTRACTS OF JAPAN vol. 1999, no. 03, 31 March 1999 (1999-03-31) & JP 10 334730 A (SHOWA DENKO K.K.), 18 December 1998 (1998-12-18)
• PATENT ABSTRACTS OF JAPAN vol. 2000, no. 23, 10 February 2001 (2001-02-10) & JP 2001 167794 A (JAPAN STORAGE BATTERY CO. LTD.), 22 June 2001 (2001-06-22)
• PATENT ABSTRACTS OF JAPAN vol. 2000, no. 02, 29 February 2000 (2000-02-29) & JP 11 317242 A (SANYO ELECTRIC CO. LTD.), 16 November 1999 (1999-11-16)
• PATENT ABSTRACTS OF JAPAN vol. 1997, no. 02, 28 February 1997 (1997-02-28) & JP 8 255615 A (NIPPONDENSO CO. LTD.), 1 October 1996 (1996-10-01)
• PATENT ABSTRACTS OF JAPAN vol. 2002, no. 05, 3 May 2002 (2002-05-03) & JP 2002 008730 A (FDK CORP.), 11 January 2002 (2002-01-11)
• PATENT ABSTRACTS OF JAPAN vol. 1998, no. 10, 31 August 1998 (1998-08-31) & JP 10 116603 A (SANYO ELECTRIC CO. LTD.), 6 May 1998 (1998-05-06)

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a non-aqueous electrolyte and has particular reference to a non-aqueous electrolyte which can be used in a primary or secondary battery, such as a lithium battery, in a supercapacitor, in an electrochromic device or in a solar energy cell. Furthermore, the present invention relates to a non-aqueous electrolyte when used in any of the foregoing devices.

Lithium batteries are known in non-rechargeable and in rechargeable form. Such batteries comprise positive and negative electrodes with a non-aqueous electrolyte disposed between them.

In a rechargeable lithium ion battery (secondary battery) the positive electrode of the battery can for example be $LiCoO_2$ (referred to as the "cathode" in Li-battery community) and the negative electrode can for example be carbon (referred to as the "anode" in Li-battery community). In a non-rechargeable battery (primary battery) the positive electrode can for example be $MnO_2$ and the negative electrode can be lithium metal. Various different types of electrolyte are known. For example there is the class of liquid electrolytes comprising at least one ionically conducting salt such as Li (TFSI), i.e. lithium bis(trifluorosulphonyl)imide, $LiPF_6$, i.e. lithium hexafluorophosphate or $LiClO_4$, i.e. lithium perchlorate which are present, with a low degree of dissociation within a non-aqueous solvent such as a mixture of DME (dimethylethane) and EC (ethylene carbonate), a mixture of DEC (diethylene carbonate) and EC, or a mixture of DMC (dimethyl carbonate) and EC or PC (propylene carbonate) or combinations thereof.

In addition there are so-called dry polymer electrolytes. In these electrolytes the salt is selected as before (i.e. for example from Li(TFSI), $LiPF_6$ or $LiClO_4$) and is dispersed in a polymer or mixture of polymers. Suitable polymers comprise PEO (polyethylene oxide), PVDF (polyvinylene di-fluoride), PAN (polyacrylonitrile), and PMMA (polymethyl methyl acrylate).

Furthermore, there are so called polymer gel electrolytes. These have the same basic composition as the dry polymer electrolytes recited above but include a solvent, for example a solvent of the kind recited in connection with the liquid electrolytes given above.

The known liquid electrolytes described have the advantage that they have a high ionic conductivity up to a transference number of 6 and a high conductivity of $10^{-2}$ S/cm. In addition the liquid properties ensure good wetting of the electrode surface. They are however dangerous because leakage can occur, so that safety considerations arise. In addition they can lead to passivation effects which are undesirable.

The dry polymer electrolytes do not result in good wetting of the electrodes, the conductivities which can be achieved are quite low and there is also not much scope for modifying the chemical composition of the ingredients. However, the electrolytes are good safety-wise and no leakage occurs.

With the polymer gel electrolytes the change in liquid content results in reductions in the conductivity and there is also the danger of leakage.

The object of the present invention is to provide an electrolyte comprising a lithium salt and a solvent as before but with an improved conductivity.

In order to satisfy this object there is provided, in accordance with the present invention, a non-aqueous electrolyte including

- at least one ionically conducting salt, especially a lithium salt,
- a non-aqueous, anhydrous solvent for the ionically conductive salt, said solvent being selected to achieve a degree of dissociation in the range from $1 \times 10^{-1}$ to $10^8/1^{-1}.mol^{-1}$ of the ionically conductive salt in the non-aqueous solvent,
- at least one oxide in a particulate form with a particle size below $5\mu m$, said oxide being selected such that it is not soluble in said solvent, such that it is water-free and such that it is present in the electrolyte in an amount by volume in the range from 20 to 50%, preferably of about 25%.

The applicants have namely found that the addition of fine oxide particles, e.g. in powder or elongate particle form, leads to a substantial increase in conductivity but with no disadvantages.

The addition of oxide materials to electrolytes for use in Lithium batteries is admittedly known in the art but the quantities used are much less than the amount used in the present invention, typically less than 20% by weight and the additions are made for completely different purposes and the references do not recognize that an increase in conductivity can be achieved by using a larger percentage of oxide in the electrolyte. Some of the prior art references describing oxide additions for batteries will now be described in the following.

JP-A-2003317695, which was published after the claimed priority date and does not constitute citable prior art describes the addition of silica or alumina to a separator for a non-aqueous electrolyte lithium ion cell. The separator is obtained by dipping a porous film in a non-aqueous electrolyte solution after the inorganic fine powder is dispersed in and supported by the porous film.

EP-A-0 895 296 A1 has as its object the provision of a sheet-like sealed non-aqueous electrolyte cell having a laminated metal casing, which cell includes a means for preventing a trace amount of water present therein from causing deterioration in the performance of the cell. This object is satisfied by a sealed non-aqueous electrolyte cell comprising a casing made from a laminated material comprising a metal foil and a resin film, with an inorganic oxide fine powder that is not an electrode active material and being accommodated within the casing together with electric energy generating elements. The inorganic oxide fine powder can be alumina, magnesia or a complex oxide composed of alumina and magnesia. It can also be silicon dioxide in an amount of 5 % by weight as disclosed in the Example 85 in conjunction with Example 1 to which Example 85 relates.

The percentage of the oxide claimed to be effective in taking up water and hydrofluoric acid and thus preventing deterioration of the cell, lies between 0.05 and 20 % by weight of the electrolyte. In one example 30 % by weight of alumina was added, however, the specification considered this proportion to be disadvantageous because - according to the reference - the cell capacity ratio decreases to a significant extent when the alumina content exceeds 20 %. For this reason, the reference specifies a preferred range for the quantity of oxide as being 20wt% or less.

JP-A-10334730 is concerned with the problem of providing a stable, high-performance, inexpensive electrolyte minimized in impurity and easy to manufacture and handle to provide a long-lived, highly reliable, and high-performance non-aqueous battery by adding an alumina fine particle having a high specific surface area and a low water content to an organic electrolyte. This reference also discloses an addition of the oxide in the amount of 0.05 to 30 % by weight of the electrolyte. The reference is thus very similar to EP-A-0 895 296 discussed above.

JP-A-2001167794 describes the presence of an inorganic substance having a fiber phase of 5 to 20 $\mu$m length and an aspect ratio not less than 5 in a polymer electrolyte.

US-A-5,168,019 is another reference which discloses the presence of aluminum oxide dispersed in an electrolyte comprising $LiPF_6$, in this case dissolved in a solvent of propylene carbonate. It also refers to an addition of barium oxide and magnesium oxide to the electrolyte. The percentage of oxide added was in all cases 0.5 % by weight. Again, the intention is to absorb any hydrofluoric acid which arises and counteract the lowering of the discharge capacity of the battery.

JP-A-11317242 describes, in order to suppress the self discharge of a battery and enhance the storage characteristic, the addition of cobalt oxide present in one of the electrodes of the battery to the electrolyte to provide cobalt ions in the electrolyte prior to filtering out the oxide and inserting the electrolyte in the battery. This is done to prevent the elution of cobalt from a positive electrode material, such as $LiCoO_2$ or $Co_3O_4$.

US-A-6,045,594 is similar to JP-A-11317242 and again describes the treatment of the non-aqueous electrolyte with an oxide of the metal of the positive electrode, in this case cobalt oxide or manganese oxide, before the non-aqueous electrolyte is assembled into the battery. As before, the idea is to provide manganese ions or cobalt ions in the electrolyte to prohibit elution of manganese ions or cobalt ions from the positive electrode material. Once the electrolyte has been treated by the addition of the manganese oxide or the cobalt oxide, it is filtered prior to filling the electrolyte (without oxide) into battery.

EP-A-0 805 504 A1 describes the dissolution of boron oxide ($B_2O_3$) in an electrolyte in the amount from 0.1 % to 1 % by weight of the electrolyte to improve capacity fade rate.

JP-A-08255615 describes the addition of an inorganic material such as silica, alumina, magnesia, beryllia, titanium oxide, zirconia and a nitride such as born nitride, silicon nitride, aluminum nitride to a solid electrolyte to improve the heat conductivity of the solid electrolyte and thus the heat radiating property thereof.

US-A-3,625,769 is concerned with a fuel cell comprising a positive electrode in the form of an oxygen electrode and a negative electrode containing lithium metal as an essential active ingredient. A non-aqueous electrolyte comprising an inert aprotic solvent, lithium oxide in an amount sufficient to substantially saturate the organic solvent and an ionizable non-oxygen carrying salt which is capable in the electrolyte of reducing the resistivity thereof is provided together with a means for contacting the oxygen electrode with oxygen. The oxide is present in the solvent in an amount sufficient to saturate the solvent with it.

JP-A-2002008730 discloses the presence of inorganic particles such as alumina and silicon on the inside of the electrolyte retaining layer of a lithium secondary battery to counteract changes in volume of the electrode, but the alumina or silica are not provided in the electrolyte itself.

JP-A-10116603 describes the incorporation of alumina and manganese oxide into carbon powder for an electrode of a lithium secondary battery. Instead of alumina, $In_2O_2$, $Tl_2O_3$, $LiAlO_2$, $LiGaO_2$ and $LiTiO_2$ can be added to the electrode material.

US-A-4,228,229 relates to an electrochemical primary cell whose negative active material is lithium, whose positive active material includes thionyl chloride and whose electrolyte consists essentially of a solution of, as a solute, a complex salt resulting from the reaction of aluminum chloride with an ionizable compound selected from the group consisting of lithium oxide ($Li_2O$), calcium oxide (CaO) and barium oxide (BaO) dissolved in thionyl chloride. There is thus no particulate oxide material present in the electrolyte.

When used in a primary or secondary lithium battery having positive and negative electrodes, the oxide used for the present invention should be selected such that it does not react with the material of either of said positive and negative electrodes.

The non-aqueous electrolyte of the present invention is not restricted to use in a battery, it can for example be used in a supercapacitor, in electrochromic devices such as electro-chromic displays or in a solar energy cell.

In the non-aqueous electrolyte of the invention the ionically conductive salt is selected from the group comprising Li(TFSI), $LiPF_6$ and $LiClO_4$, or a sodium salt or a silver salt.

Moreover, the non-aqueous, anhydrous solvent is preferably selected from the group comprising DME/EC, DEC/EC, DMC/EC, PC, carbonate based solvents related to any of the foregoing, DMSO, organic sulphur compounds, THF, AN and mixtures of any of the foregoing.

The oxide used for the invention is preferably selected from the group comprising oxides exhibiting acidic properties, for example $SiO_2$, $TiO_2$ and oxides exhibiting basic properties, for example $Al_2O_3$, MgO and any mixtures thereof.

The average particle size of the oxide for particles of approximately spherical shape, is selected to be less than 5 $\mu$m and preferably less than 2 $\mu$m, with no lower limit other than that set by manufacturing techniques used to produce said oxide. For elongate particles, such as nano-wires or nano-tubes, the average diameter is selected to be less than 1 $\mu$m, preferably less than 100 nm, there being no limit on the length of such elongate particles.

The amount of oxide present in the electrolyte is preferably such as to give the electrolyte a consistency between that of a liquid and a solid, preferably a consistency similar to that of a soggy sand, i.e. a liquid and sand mixture having a consistency such that sedimentation effects do not occur.

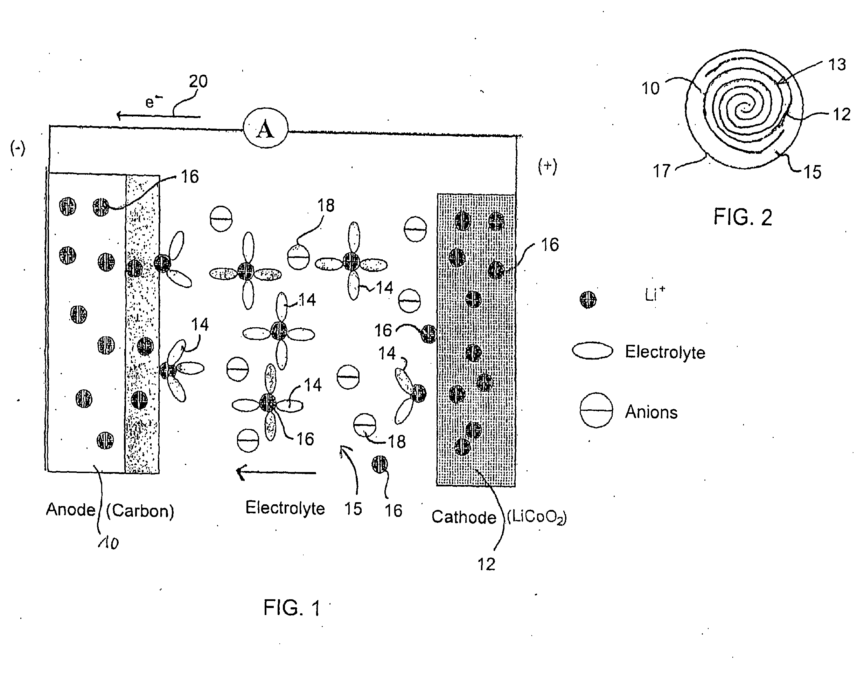

The invention will now be described in further detail with reference to basic designs of Lithium batteries known in the prior art as shown in Figs. 1 and 2 and with reference to the results of experiments carried out on examples of electrolytes in accordance with the present invention.

More specifically:

Fig. 1 shows a schematic illustration of a conventional lithium-ion battery,

Fig. 2 shows a schematic illustration of an alternative design of a lithium-ion battery,

Fig. 3 shows a plot of composite conductivity versus various oxide volume fractions ( particle size (=2r) approx 0.3 $\mu$m) at room temperature illustrating how oxide surface acidity/ basicity influences the composite conductivity, with the insert showing the influence of particle size on composite conductivity,

Fig.4 shows a plot of $SiO_2$/$LiClO_4$-MeOH and $SiO_2$/$LiClO_4$-THF composite conductivity versus $SiO_2$ fraction (particle size approx. 0.3 $\mu$m) for different solvents at room temperature illustrating the ion association in a non-aqueous solution and

Fig. 5 shows the variation of high-conducting layer conductivity in various oxide solution composites versus oxide concentrations expressed as a volume fraction.

Referring first of all to Fig. 1 there is shown a diagram showing the basic configuration of an Li-ion battery of a kind used for research. It typically comprises an anode (in this case a carbon anode) 10, a cathode 12, in this case $LiCoO_2$ and an electrolyte 14 disposed in the space between the anode 10 and the cathode 12. Present throughout the volume of the electrolyte 15 are also lithium ions 16 shown as circles with a cross in the middle, and anions 18 shown as larger circles with a single line through the middle. When an external circuit is connected to the battery, current flows in the direction opposite to the arrow 20 during discharging and in the direction of the arrow during charging.

It has already been established by others that transition metal oxides, more specifically the oxides Fe, Ni, Co, Cu, show promising performance as anode materials for rechargeable lithium batteries. The reversible Li-storage mechanism is due to the formation and decomposition of $Li_2O$ upon the electrochemical insertion/extraction of Li. The key point for the reversibility seems to be the formation of a special microstructure in which metal clusters are dispersed uniformly with $Li_2O$ at a nanoscale after electrochemical reaction of metal oxide with Li.

German patent application 102 42 694.5 assigned to the present applicants recognises that LiF, which is electrochemically inactive, shows electrochemical activity when it is dispersed with a transition metal at atomic or nanoscale level. A series of transition metal fluorides ( M = Ti, V, Mn, Fe, Co, Ni, Cu) were investigated and led to favorable results.

The experimental setup was as follows:

The working electrodes comprised either **TiF3A**: $TiF_3$: PVDF (9: 1) on Ti foil; or **TiF3B**: $TiF_3$: CB: GP: PVDF (10:0.5:0.5:1) on Ti foil. CB denotes carbon black, GP denotes graphite and PVDF denotes polyvinylene di-fluoride. The pasting procedures for the electrode film on the Ti-foil are similar to those reported in H. Li. L.H. Shi, W. Lu, X.J. Huang, L.Q. Chen, J. Electrochem. Soc., 148, A915(2001)

The electrochemical cells tested were 2-electrode cells for electrochemical testing similar in layout to the known cell of Fig. 1 but using the alternative electrodes. It is noted that the electrode materials proposed and claimed in the German patent application 102 42 694.5 can be used as either anodes or cathodes depending on the relative potential difference to the metal lithium. If this potential difference is 2.5 volts or less then the material is considered suitable as an anode material. If the potential difference is 2.5 volts or more then the material is considered suitable as a cathode material.

Fig. 2 shows an alternative layout for a battery where the electrodes 10 and 12 are coiled in a spiral 13 with the electrolyte 15 disposed between them and the structure being encapsulated in a housing 17. Terminals connected to the anode 10 and the cathode 12 are provided at opposite ends of the housing (terminals not shown) in manner known per se. The same layout as shown in and described with reference to Fig 2 can be used for a supercapacitor.

The materials can be the same as those described with reference to Fig. 1.

Two examples will now be given for the preparation of non-aqueous, anhydrous electrolytes:

Example 1:

The composite electrolyte was prepared in the form of a mixture of fine particles of ceramic oxides ($SiO_2$, $TiO_2$ and $Al_2O_3$, radius : r ~ 0.15 $\mu$m) with a non-aqueous solution of 0.1M $LiClO_4$ in Methanol (MeOH). Although MeOH was selected for this test it is not a preferred solvent for lithium batteries. However, because the invention is effective using MeOH it appears certain that it will work better in the preferred solvents, i.e. in a non-aqueous, anhydrous solvent selected from the group comprising DME/EC, DEC/EC, DMC/EC, PC, carbonate based solvents related to any of the foregoing, DMSO, organic sulphur compounds, THF, AN and mixtures of any of the foregoing, and indeed practical tests have confirmed this.

In this example the oxides were dried in vacuum at 250°C for 24 hours prior to composite preparation and all samples were prepared under an Argon atmosphere in a glove box (closed container with a window and gloves for handling the materials involved). Room temperature conductivity was measured for various volume fractions using impedance spectroscopy with the samples placed between two parallel stainless steel electrodes of a home-built cell (samples loaded under Argon). The impurity effects were excluded by pre-washing the oxides in the liquid solvents. The conductivity was better than 2 x $10^{-3}$ S/cm.

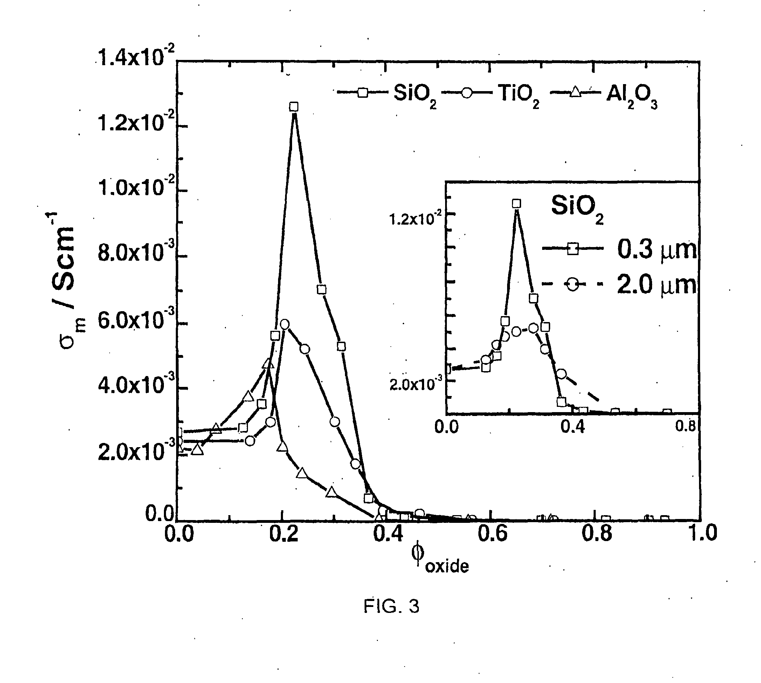

Figure 3 shows the variation of the effective overall ionic conductivity with volume fraction ($\varphi$) for different oxides. As observed for all the oxides, the composite conductivity with oxide volume fraction shows a percolation-type behaviour that is typical for a composite electrolyte with enhanced interfacial conductivity, i.e. low conductivity at low oxide content, a pronounced increase with a marked maximum and subsequent decrease at higher volume fractions. Since in the inorganic solid-solid composite electrolytes the pathways are ordered ($Al_2O_3$ particles along the grain boundaries), the percolation threshold is normally shifted to lower volume fractions. Composite conductivity is, as Figure 3 shows, highly influenced by the differing surface acid-base property of the oxides ; the conductivity enhancement is higher for the acidic oxides $SiO_2$, $TiO_2$ (highest for $SiO_2$) compared to the more basic $Al_2O_3$ (pH of point of zero charge (pzc) in aqueous solutions being: 3, 5 and 9 for $SiO_2$, $TiO_2$ and $Al_2O_3$ respectively.

This is interpreted as suggesting that the conductivity enhancement in the liquid-solid composite is attributable to the formation of a highly conducting layer around the oxide filler with a higher Li ion conductivity compared to that in the solution caused by adsorption of the anion and breaking up of the ion-pair. This is also supported by $\zeta$-potential measurements ($\varphi_{oxide} \approx 5 \times 10^{-5}$, [LiClO4] $\approx 10^{-3}$M) arising out of the effective surface charge showing a more negative potential measuring from $Al_2O_3$ (-18.3 mV) to $SiO_2$ (-36.3 mV). In the regime of lower oxide fractions, i.e. in the colloidal regime, the double layer repulsion works against percolation and leads to the very poor effect in the case of $SiO_2$. The earlier but smoother increase (lower percolation threshold) in that regime of the $Al_2O_3$ composite is in agreement with a lower charge density at the $Al_2O_3$ surface. As soon as the particles are forced to be sufficiently close (Debye length, $\lambda$ ~ 100 nm) the interfacial conductivity percolates (in a cubic arrangement the minimal particle-particle distance ($\delta$) is assesed to be 2$\delta \approx$ 2r at $\varphi \approx$ 6.5%). At this volume fraction range the situation resembles the Nafion-type electrolytes in which the counter ion is attached to the polymer backbone and the proton is mobile within tiny water filled channels. Since the freed counter ion needs solvent to be mobile the conductivity breaks down at higher $\varphi$, (in cubic arrangement $\delta \approx$ 0 for $\varphi \approx$ 52%). The maximum conductivity enhancement was observed for $SiO_2$-composite with $\sigma_m$=1.2x$10^{-2}$ S / cm which is of the order of a high conducting electrolyte used for Li-battery. The interfacial picture is also supported by the fact that the $SiO_2$ with larger surface area per unit volume, i.e. with an average particle size of 0.3$\mu$m, (inset Fig. 3) is distinctly more active than with an average particle size of 2.0$\mu$m.

Example 2:

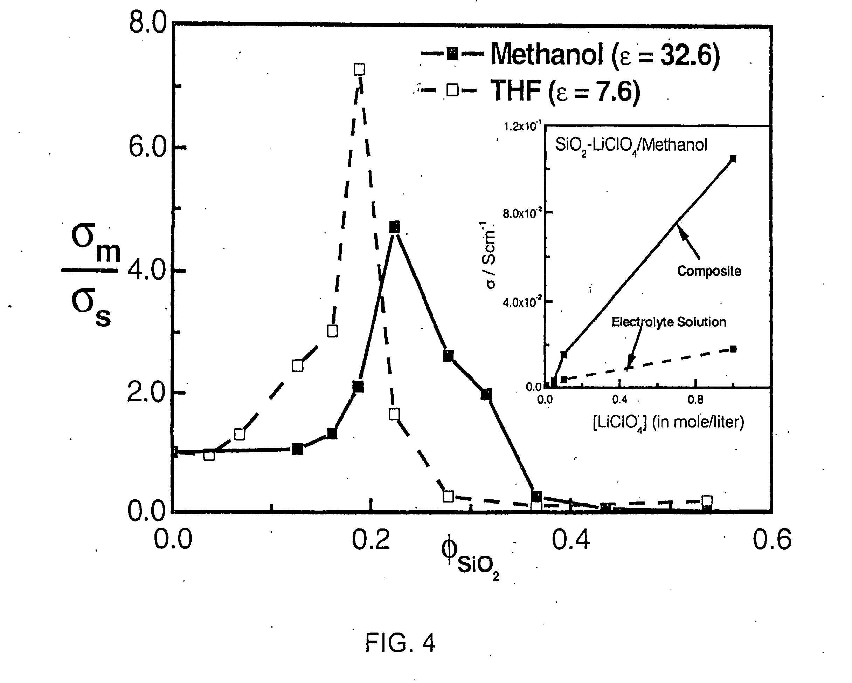

The role of the oxides in dissociation of ion-pairs in non-aqueous solution was further investigated by preparing composite electrolytes comprising a solution of an Li-salt in tetrahydrofuran (THF) with added $SiO_2$. The THF exhibits a significantly lower dielectric constant ($\varepsilon_{THF}$ = 7.4) compared to MeOH ($\varepsilon_{MeOH}$ = 32.6). Indeed, as shown in Fig. 4, the THF-composite shows a markedly higher enhancement in conductivity (with lower absolute σ values) compared to the MeOH-composite for similar silica particle size and identical salt concentrations. The degree of ion-association in the case of THF (association constant of $LiClO_4$ in THF at 298 K is $4.8 \times 10^7/ l^{-1}.mol^{-1}$) is apparently higher than MeOH and the impact of the filler is accordingly higher, as is evident from Fig. 4. The fact that percolation starts earlier in the THF case is consistent with the lower ε (double repulsion ∝ ε) corresponding to a smaller surface charge (see equation 2). The relevance of ion-association was further corroborated by carrying out the experiment at different $Li^+$ salt concentration in MeOH, keeping the $SiO_2$ volume fraction fixed (inset of Fig. 4). As is evident, the conductivity enhancement disappears at high dilution since the association vanishes due to entropy. According to mass action, the degree of dissociation has to approach unity as salt concentration tends to zero.

The effective composite conductivity ($\sigma_m$) can be written as follows :

$$\sigma_m = \beta_s \varphi_s \sigma_s + \beta_l \varphi_l \, \Delta\sigma_{m,l} \qquad\qquad 1)$$

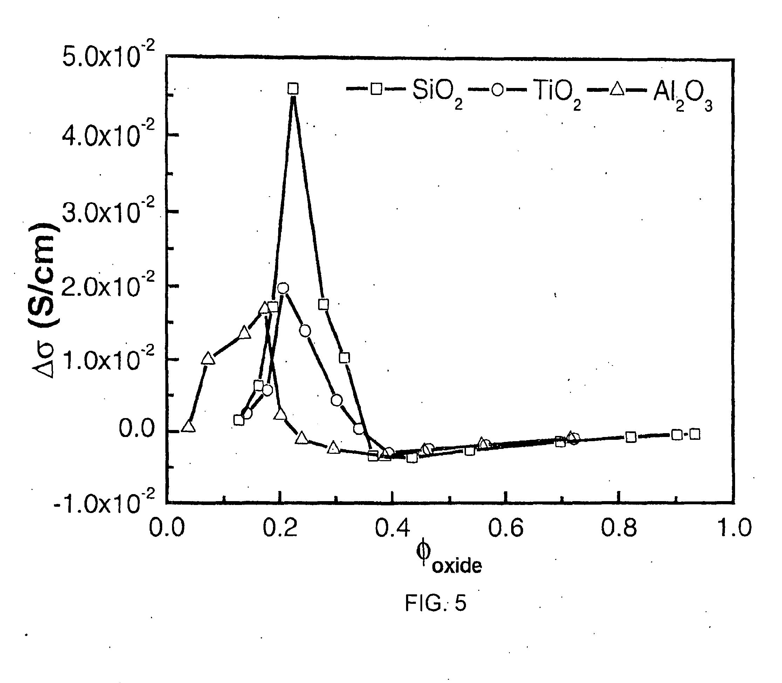

where $\varphi_s$ and $\varphi_1$ are the volume fractions for solution and high conducting layer respectively whereas $\sigma_s$ and $\Delta\sigma_{m,1}$ are respectively the ionic conductivities for the solution and excess conductivity of the high conducting layer. The β-factors measure the degree of percolation and are of the order of unity for a parallel switching (only percolating pathways). They are distinctly less and depend on φ if this is not the case. Equation (1) leads to the estimate of lower limit of the maximum interfacial conductivity according to $\Delta\sigma_{m,l} > \dfrac{\sigma_m - \sigma_s(1-\phi)}{\phi}$ which is plotted in Figure 5 and pronounces even more the differences in the percolation behavior. A further evaluation of the peak conductivity in terms of the space charge effect, requires a more detailed insight into the distribution also with respect to the boundary conditions. The r.h.s. of equation 1 is proportional to $uF(\varepsilon T c_o)^{\frac{1}{2}}$ (where $u$ is the mobility of the Li ions, $F$ is the Faraday constant, ε is the dielectric constant, $T$ is the absolute temperature and $c_o$ is the concentration in the first layer adjacent to the adsorption layer) for semi-infinite boundary conditions and large effects while it tends to $uFc_o$ for a vanishing solution channel width (given a sufficient thickness to maintain mobility).

Since the dielectric constant of $CH_3OH$ is comparable to that of typical Lithium battery electrolytes a marked improvement is expected when using improved "soggy sand" electrolytes of the invention based on electrolytes which are (meta)stable in Li-batteries. The experiments conducted to date give strong evidence for the possibility of enhancing ion transport in non-aqueous solutions by breaking ion-pairs at the interfaces to appropriate second phases. Beyond that they indicate the validity of heterogeneous doping mechanism proposed for inorganic crystals to be operative also for polymer electrolytes.

The experiments conducted provide evidence for the usefulness of composite electrolytes consisting of liquid non-aqueous salt solutions and solid insulating particles. At high second phase contents the investigated system show distinctly enhanced conductivities and are better described as "soggy sand" electrolytes, a viscous grain ensemble wetted by the liquid. Unlike solid-liquid composites described by Amita Chandra and Joachim Maier in Solid State Ionics 148, pages 153 to 158 (2002), the effects are not additive rather they are synergistic in the sense that the overall conductivity is distinctly higher than both of the constituent phases, an effect that is ascribed to interfacial interaction. The "soggy sand" electrolytes of the invention as described above combine enhanced conductivities with the favourable mechanical properties of the soft matter.

Polymer electrolytes under consideration consist of a salt dissolved in a covalent polymer matrix (the cases of polymer electrolytes in which one ion is strongly bound to the polymer (e.g. Nafion) are not expected to exhibit a heterogeneous doping effect as touched upon later). They are materials of prime importance in the context of electrochemical devices. Since the compositional flexibility however is not unlimited, strategies for optimising the conductivity properties of a given conductor are necessary. In crystalline electrolytes, i.e. influencing the conductivity by adding second phase particles proved very helpful in different cases. Indeed it has been found [Scrosati, Wieczorek] that the dispersion of oxides leads to significant conductivity increases in crystalline electrolytes. Different explanations have been proposed, most of them considering mobility changes owing to segmental motion of the polymers, variation of the degree of crystallinity etc., whereas the effect in composite inorganic electrolytes, to which the present invention is directed, has been essentially attributed to a charge carrier concentration effect.

The heterogeneous doping effect consists of internally adsorbing one ion sort and hence effectively leading to dissociation. In the crystalline state e.g. AgCl:Al$_2$O$_3$ this may be the adsorption of Ag$^+$ or F- ions connected with its removal from the energetically deep-lying regular positions resulting in the generation of vacancies as mobile carriers. In the covalent matrix the immobile ground state would be the undissociated ion pair with the conductivity effect consisting in the adsorption of one pair constituent resulting in breaking of the ion pair and generating a mobile counter ion as described by J.Maier, Prog. Solid St. Chem 23 pages 171 to 263 (1995). Testing this hypothesis is rather difficult since a polymer matrix may be different in various ways. It was for this reason that a decision was made to test the effect of oxide additions to a salt in a liquid solvent of low polarity, i.e. MeOH. It was found that the conductivity is significantly enhanced with a percolation behaviour typical for interfacial conductivity and that the different impact of oxides with different basicity points towards a perchlorate adsorption and hence increased Li$^+$ conductivity.

References :

- Amita Chandra and Joachim Maier, Solid State Ionics 148, 153-158 (2002).
- W.Wieczorek, Z. Florjanczyk and J.R. Stevens, Electrochim. Acta 40, 2251-2258 (1995).
- Polymer electrolytes by F. Gray and M. Armand in Handbook of Battery Materials ed. By J. O. Besenhard (Wiley-VCH, Weinheim, 1999)
- Croce, F., Appetecchi, G.B., Persi, L. and Scrosati, B. Nanocomposite polymer electrolytes for lithium batteries. Nature 394, 456-458 (1998).
- J. Maier, Prog. Solid. St. Chem 23, 171-263 (1995).
- Principles of ceramic processing by James S. Reed (John Wiley & Sons, New York, 1995)
-  Physical chemistry of surfaces by A.W. Adamson, (Fourth edition John Wiley & Sons, New York, 1982)
- A.S. Best, S.Rajani and J.Schoonman ; A.D' Epifanio,F.Serraino, B.Scrosati and F.Croce, Proc. Of 14th International Conference on Solid State Ionics, Monterrey, California (USA), June 22-27, 2003.

**Claims**

1.   A non-aqueous electrolyte including:

- at least one ionically conducting salt,
- a non-aqueous, anhydrous solvent for the ionically conductive salt, said solvent being selected to achieve a degree of dissociation in the range from 1 x 10$^{-1}$ to 10$^8$ / 1$^{-1}$.mol$^{-1}$ of the ionically conductive salt in the non-aqueous solvent,
- at least one oxide in a particulate form with a particle size below 5 $\mu$m, said oxide being selected such that it is not soluble in said solvent, such that it is water-free and such that it is present in the electrolyte in an amount by volume in the range from 20 to 50 %.

2.   A non-aqueous electrolyte in accordance with claim 1, when used in a primary or secondary lithium battery having positive and negative electrodes, said oxide being selected such that it does not react with the material of either of said positive and negative electrodes.

3.   A non-aqueous electrolyte in accordance with claim 1, when used in a supercapacitor.

4.   A non-aqueous electrolyte in accordance with claim 1, when used in electrochromic devices such as electro-chromic displays.

5.   A non-aqueous electrolyte in accordance with claim 1, when used in a solar energy cell.

6.   A non-aqueous electrolyte in accordance with any one of the preceding claims, wherein said ionically conductive salt is a lithium salt, for example selected from the group comprising Li(TFSI), LiPF$_6$ and LiClO$_4$, or a sodium salt or a silver salt.

7.   A non-aqueous electrolyte in accordance with any one of the preceding claims, wherein said non-aqueous, anhydrous solvent is selected from the group comprising DME/EC, DEC/EC, DMC/EC, PC, carbonate based solvents related to any of the foregoing, DMSO, organic sulphur compounds, THF, AN and mixtures of any of the foregoing.

8. A non-aqueous electrolyte in accordance with any one of the preceding claims, wherein said oxide is selected from the group comprising oxides exhibiting acidic properties, for example $SiO_2$, $TiO_2$ and oxides exhibiting basic properties, for example $Al_2O_3$, MgO and any mixtures thereof.

9. A non-aqueous electrolyte in accordance with any one of the preceding claims, wherein the average particle size of the oxide for particles of approximately spherical shape, is selected to be less than 2 $\mu$m, with no lower limit other than that set by manufacturing techniques used to produce said oxide, and, for elongate particles, such as nano-wires or nano-tubes, the average diameter is selected to be less than 1 $\mu$m, preferably less than 100 nm, there being no limit on the length of such elongate particles.

10. A non-aqueous electrolyte in accordance with any one of the preceding claims, wherein the oxide is present in the electrolyte in an amount such as to give the electrolyte a consistency between that of a liquid and a solid, preferably a consistency similar to that of a soggy sand, i.e. a liquid and sand mixture having a consistency such that sedimentation effects do not occur.

11. A non-aqueous electrolyte in accordance with any one of the preceding claims, wherein the oxide is present in the electrolyte in an amount by volume of about 25 %.

12. A battery comprising positive and negative electrodes and a non-aqueous electrolyte in accordance with any one of the preceding claims 1 and 5 to 11.

13. A supercapacitor comprising positive and negative electrodes and a non-aqueous electrolyte in accordance with any one of the preceding claims 1 and 5 to 11 disposed between said electrodes.

14. An electro-chromic device including an electrolyte in accordance with any one of the preceding claims 1 and 5 to 11.

15. A solar energy cell including an electrolyte in accordance with any one of the preceding claims 1 and 5 to 11.

**Patentansprüche**

1. Nicht wässriger Elektrolyt enthaltend:

   - wenigstens ein Ionen leitendes Salz,
   - ein nicht wässriges, wasserfreies Lösemittel für das Ionen leitende Salz, wobei das Lösemittel so ausgewählt ist, dass ein Dissoziationsgrad des Ionen leitenden Salzes in dem nicht wässrigen Lösemittel in einem Bereich zwischen 1 x $10^{-1}$ und $10^8$ $1^{-1} \cdot mol^{-1}$ erreicht wird,
   - wenigstens ein Oxid in einer partikulären Form mit einer Partikelgröße von weniger als 5 $\mu$m, wobei das Oxid so ausgewählt ist, dass dieses in dem Lösemittel nicht löslich ist, dass es wasserfrei ist, und, dass es in dem Elektrolyten in einer Menge pro Volumen in einem Bereich zwischen 20 und 50 % vorliegt.

2. Nicht wässriger Elektrolyt nach Anspruch 1, wobei, wenn dieser in einer primären oder sekundären Lithiumbatterie mit positiven und negativen Elektroden eingesetzt wird, das Oxid so ausgewählt ist, dass dieses nicht mit dem Material von jeder der positiven und negativen Elektroden reagiert.

3. Nicht wässriger Elektrolyt nach Anspruch 1, eingesetzt in einem Superkondensator.

4. Nicht wässriger Elektrolyt nach Anspruch 1, eingesetzt in elektrochromischen Vorrichtungen, wie in elektrochromischen Anzeigenelementen.

5. Nicht wässriger Elektrolyt nach Anspruch 1, eingesetzt in einer Solarenergiezelle.

6. Nicht wässriger Elektrolyt nach einem der vorhergehenden Ansprüche, wobei das Ionen leitende Salz ein Lithiumsalz, das beispielsweise aus der Gruppe umfassend Li(TFSI), $LiPF_6$ und $LiClO_4$ ausgewählt ist, oder ein Natriumsalz oder ein Silbersalz ist.

7. Nicht wässriger Elektrolyt nach einem der vorhergehenden Ansprüche, wobei das nicht wässrige, wasserfreie Lösemittel aus der Gruppe ausgewählt ist, welche DME/EC, DEC/EC, DMC/EC, PC, jedes den vorstehend genannten zugehörige Lösemittel auf Carbonatbasis, DMSO, organische Schwefelverbindungen, THF, AN und Mischungen von allen der vorgenannten umfasst.

8. Nicht wässriger Elektrolyt nach einem der vorhergehenden Ansprüche, wobei das Oxid aus der Gruppe ausgewählt ist, welche Oxide, welche Säureeigenschaften aufweisen, wie beispielsweise $SiO_2$, $TiO_2$, und Oxide, welche Base-neigenschaften aufweisen, beispielsweise $AlaO_3$, MgO und allen Mischungen hiervon, umfasst.

9. Nicht wässriger Elektrolyt nach einem der vorhergehenden Ansprüche, wobei die durchschnittliche Partikelgröße des Oxids für Partikel mit ungefähr kugelförmiger Form so ausgewählt ist, dass diese weniger als 2 $\mu$m beträgt, und zwar ohne untere Grenze anders als der durch die zur Herstellung des Oxids eingesetzten Herstellungstechniken eingestellten, und für längliche Partikel, wie Nanodrähte oder Nanoröhrchen, der durchschnittliche Durchmesser so ausgewählt ist, dass dieser weniger als 1 $\mu$m, vorzugsweise weniger als 100 nm, beträgt, wobei bezüglich der Länge der länglichen Partikel keine Beschränkung besteht.

10. Nicht wässriger Elektrolyt nach einem der vorhergehenden Ansprüche, wobei das Oxid in dem Elektrolyt in einer solchen Menge vorliegt, dass dieses dem Elektrolyten eine Konsistenz zwischen der einer Flüssigkeit und der eines Feststoffs, vorzugsweise eine Konsistenz ähnlich zu der eines feuchten Sandes, d.h. einer Mischung aus Flüssigkeit und Sand mit einer Konsistenz, dass keine Sedimentationseffekte auftreten, verleiht.

11. Nicht wässriger Elektrolyt nach einem der vorhergehenden Ansprüche, wobei das Oxid in dem Elektrolyt in einer Menge pro Volumen von ungefähr 25 % vorliegt.

12. Batterie enthaltend positive und negative Elektroden und einen nicht wässrigen Elektrolyt nach einem der vorhergehenden Ansprüche 1 und 5 bis 11.

13. Superkondensator umfassend positive und negative Elektroden und einen nicht wässrigen Elektrolyt nach einem der vorhergehenden Ansprüche 1 und 5 bis 11, welcher zwischen den Elektroden angeordnet ist.

14. Elektrochromische Vorrichtung umfassend einen Elektrolyt nach einem der vorhergehenden Ansprüche 1 und 5 bis 11.

15. Solarenergiezelle umfassend einen Elektrolyt nach einem der vorhergehenden Ansprüche 1 und 5 bis 11.

**Revendications**

1. Électrolyte non-aqueux, incluant :

   - au moins un sel conducteur ionique,
   - un solvant anhydre non-aqueux pour le sel conducteur ionique, ledit solvant étant choisi pour atteindre un degré de dissociation dans la plage de 1 x $10^{-1}$ à $10^8$/$1^{-1}$ · $mol^{-1}$ du sel conducteur ionique dans le solvant non-aqueux,
   - au moins un oxyde dans une forme de particules avec une taille de particules au-dessous de 5 $\mu$m, ledit oxyde étant choisi de telle manière qu'il n'est pas soluble dans ledit solvant, qu'il soit dépourvu d'eau, et qu'il soit présent dans l'électrolyte dans une quantité en volume dans la plage de 20 à 50 %.

2. Électrolyte non-aqueux selon la revendication 1, lorsqu'il est utilisé dans une batterie au lithium primaire ou secondaire ayant des électrodes positive et négative, ledit oxyde étant choisi de telle manière qu'il ne réagit pas avec le matériau de l'une ou l'autre desdites électrodes positive et négative.

3. Électrolyte non-aqueux selon la revendication 1, lorsqu'il est utilisé dans une supercapacité.

4. Électrolyte non-aqueux selon la revendication 1, lorsqu'il est utilisé dans des dispositifs électrochromiques, comme des affichages électrochromiques.

5. Électrolyte non-aqueux selon la revendication 1, lorsqu'il est utilisé dans une cellule à énergie solaire.

6. Électrolyte non-aqueux selon l'une quelconque des revendications précédentes, dans lequel ledit sel conducteur ionique est un sel de lithium, par exemple choisi parmi le groupe comprenant Li(TFSI), $LiPF_6$ et $LiClO_4$, ou un sel de sodium ou un sel d'argent.

7. Électrolyte non-aqueux selon l'une quelconque des revendications précédentes, dans lequel ledit solvant anhydre non-aqueux est choisi parmi le groupe comprenant DME/EC, DEC/EC, DMC/EC, PC, les solvants à base de carbonate en relation avec l'un quelconque des précédents, DMSO, les composés aux sulfures organiques, THF, AN, et les mélanges de l'un quelconque des précédents.

8. Électrolyte non-aqueux selon l'une quelconque des revendications précédentes, dans lequel ledit oxyde est choisi parmi le groupe comprenant les oxydes présentant des propriétés acides, par exemple $SiO_2$, $TiO_2$, et les oxydes présentant des propriétés basiques, par exemple $Al_2O_3$, Mg O, et tous leurs mélanges.

9. Électrolyte non-aqueux selon l'une quelconque des revendications précédentes, dans lequel la taille de particules moyenne de l'oxyde, pour des particules de forme approximativement sphérique, est choisie inférieure à 2 $\mu$m, sans limite inférieure autre que celle fixée par les techniques de fabrication utilisées pour produire ledit oxyde et, pour des particules allongées, comme des nano-fils ou des nanotubes, le diamètre moyen est choisi inférieur à 1 $\mu$m, de préférence inférieur à 100 nm, sans limite sur la longueur de telles particules allongées.

10. Électrolyte non-aqueux selon l'une quelconque des revendications précédentes, dans lequel l'oxyde est présent dans l'électrolyte dans une quantité propre à conférer à l'électrolyte une consistance entre celle d'un liquide un solide, de préférence une consistance similaire à celle d'un sable mouvant, c'est-à-dire un mélange de liquide et de sable ayant une consistance telle que des effets de sédimentation n'apparaissent pas.

11. Électrolyte non-aqueux selon l'une quelconque des revendications précédentes, dans lequel l'oxyde est présent dans les l'électrolyte dans une quantité en volume d'environ 25 %.

12. Batterie comprenant des électrodes positive et négative et un électrolyte non-aqueux selon l'une quelconque des revendications précédentes 1 et 5 à 11.

13. Supercapacité comprenant des électrodes positive et négative et un électrolyte non-aqueux selon l'une quelconque des revendications précédentes 1 et 5 à 11, disposé entre lesdites électrodes.

14. Dispositif électrochromique incluant un électrolyte selon l'une quelconque des revendications précédentes 1 et 5 à 11.

15. Cellule à énergie solaire incluant un électrolyte selon l'une quelconque des revendications précédentes 1 et 5 à 11.

FIG. 2

FIG. 1

Anode (Carbon)

Electrolyte

Cathode (LiCoO$_2$)

$e^-$

A

(-)

(+)

Li$^+$

Electrolyte

Anions

EP 1 505 680 B1

FIG. 3

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003317695 A
- EP 0895296 A
- JP 10334730 A
- JP 2001167794 A
- US 5168019 A
- JP 11317242 A
- US 6045594 A
- EP 0805504 A
- JP 08255615 A
- US 3625769 A
- JP 2002008730 A
- JP 10116603 A
- US 4228229 A
- DE 10242694

### Non-patent literature cited in the description

- **H. LI. L.H. SHI ; W. LU ; X.J. HUANG ; L.Q. CHEN.** *J. Electrochem. Soc.,* 2001, vol. 148, A915
- **AMITA CHANDRA ; JOACHIM MAIER.** *Solid State Ionics,* 2002, vol. 148, 153-158
- **J.MAIER.** *Prog. Solid St. Chem,* 1995, vol. 23, 171-263
- **W.WIECZOREK ; Z. FLORJANCZYK ; J.R. STEVENS.** *Electrochim. Acta,* 1995, vol. 40, 2251-2258
- **F. GRAY ; M. ARMAND.** Handbook of Battery Materials. Wiley-VCH, 1999
- **CROCE, F. ; APPETECCHI, G.B. ; PERSI, L. ; SCROSATI, B.** Nanocomposite polymer electrolytes for lithium batteries. *Nature,* 1998, vol. 394, 456-458
- **J. MAIER.** Prog. Solid. St. Chem. 1995, vol. 23, 171-263
- **JAMES S. REED.** Principles of ceramic processing. John Wiley & Sons, 1995
- **A.W. ADAMSON.** Physical chemistry of surfaces. John Wiley & Sons, 1982
- **A.S. BEST ; S.RAJANI ; J.SCHOONMAN ; A.D' EPIFANIO ; F.SERRAINO ; B.SCROSATI ; F.CROCE.** *Proc. Of 14th International Conference on Solid State Ionics,* 22 June 2003